# EUROPÄISCHE PATENTANMELDUNG

(11) **EP 2 534 975 A1**
(43) Veröffentlichungstag der Anmeldung: **19.12.2012**
(21) Anmeldenummer: 12405053.5
(22) Anmeldetag: 11.06.2012
(51) Int. Cl.: A47B 9/06, A47B 9/08, F16B 7/14

(54) **Vorrichtung zum Ein- und Verstellen der Länge von teleskopartig aufgebauten Tischbeinen**

(30) Priorität: 15.06.2011 CH 9992011
(71) Anmelder: Denz AG, 8606 Nänikon (CH)
(72) Erfinder: Harbeke, Christian, 8006 Zürich (CH); Müller, Ruedi August, 8700 Küsnacht (CH); Gilgen, Philipp, 4053 Basel (CH)
(74) Vertreter: Gachnang, Hans Rudolf

(57) **Zusammenfassung**

Die Vorrichtung für die Längenverstellung des Tischbeins (3) umfasst ein Aussenrohr (1) und ein Innenrohr (9). Im Innenrohr (9) ist eine Zahnschiene (15) eingesetzt, die einen längs verlaufenden Schlitz aufweist. Mit einem elastisch gefederten Zahnsegment (25), welches mittels einer Schraube (7) mit dem Aussenrohr (1) verbunden ist, kann diese gegenseitige Lage des Innenrohrs (9) und des Aussenrohrs (1) festgelegt werden.

## Beschreibung

Gegenstand der Erfindung ist eine Vorrichtung zum Ein- und Verstellen der Länge von teleskopartig aufgebauten Tischbeinen gemäss Oberbegriff des Patentanspruchs 1.

Tische, insbesondere Bürotische, müssen heute individuell in der Höhe einstellbar ausgebildet sein, um der arbeitenden Person eine möglichst ergonomische Haltung zu ermöglichen.

Es sind bereits solche Tische bekannt, deren Tischbeine in der Länge verstellbar sind. Eine mögliche Form ist ein Tischbein mit einem Innengewinde und eine im Gewinde kämmende Gewindestange, die durch Drehen in das Tischbeinrohr hinein- oder aus diesem herausgeführt wird und so die Höhe des Tischs bzw. die Länge des Tischbeins einstellbar macht.

Diese Ausführung hat den Nachteil, dass die Herstellung von Innengewinden recht kostspielig ist und bei einer grösseren Verstellung das Gewinde zum Vorschein kommt, was die Ästhetik beeinträchtigt. Es sind auch Tischbeine bekannt, die mit durchgehenden Löchern versehen sind, durch die eine Schraube oder ein Stift hindurch schiebbbar ist, um ein zweites, im Innern des Tischbeins angeordnetes Rohr in der gewünschten Lage zu fixieren. Solche mit Löchern versehene Tischbeine sind ästhetisch unbefriedigend.

Eine Aufgabe der vorliegenden Erfindung besteht nun darin, eine Vorrichtung zum Ein- und Verstellen der Länge teleskopartig aufgebauten Tischbeinen zu schaffen, welche einfach zu bedienen ist und welche das ästhetische Aussehen des Tischbeins nicht beeinträchtigt.

Gelöst wird diese Aufgabe durch eine Vorrichtung zum Ein- und Verstellen der Länge von teleskopartig aufgebauten Tischbeinen gemäss Patentanspruch 1. Vorteilhafte Ausgestaltungen der Erfindung sind in den abhängigen Ansprüchen umschrieben.

Es gelingt durch die Anordnung des Verstellmechanismus, der sehr einfach aufgebaut ist, innerhalb des Tischbeines diese Aufgabe zu lösen. Die Vorrichtung lässt sich kostengünstig herstellen und ist in der Bedienung sehr einfach, da mit einem einzigen Stellmittel, das von aussen bedienbar ist, jede beliebige Länge und in kleinen Längenschritten möglich wird.

Anhand eines illustrierten Ausführungsbeispiels wird die Erfindung näher erläutert. Es zeigen:
- Figur 1: eine perspektivische Ansicht des Aussenrohrs,
- Figur 2: eine perspektivische Ansicht des Innenrohrs,
- Figur 3: eine perspektivische Ansicht der Zahnschiene,
- Figur 4: eine perspektivische Ansicht des Zahnsegments,
- Figur 5: eine Seitenansicht des Tischbeins,
- Figur 6: eine Frontansicht des Tischbeins,
- Figur 7: eine Frontansicht des Aussenrohrs (teilweise aufgeschnitten) und
- Figur 8: einen Längsschnitt durch das Tischbein.

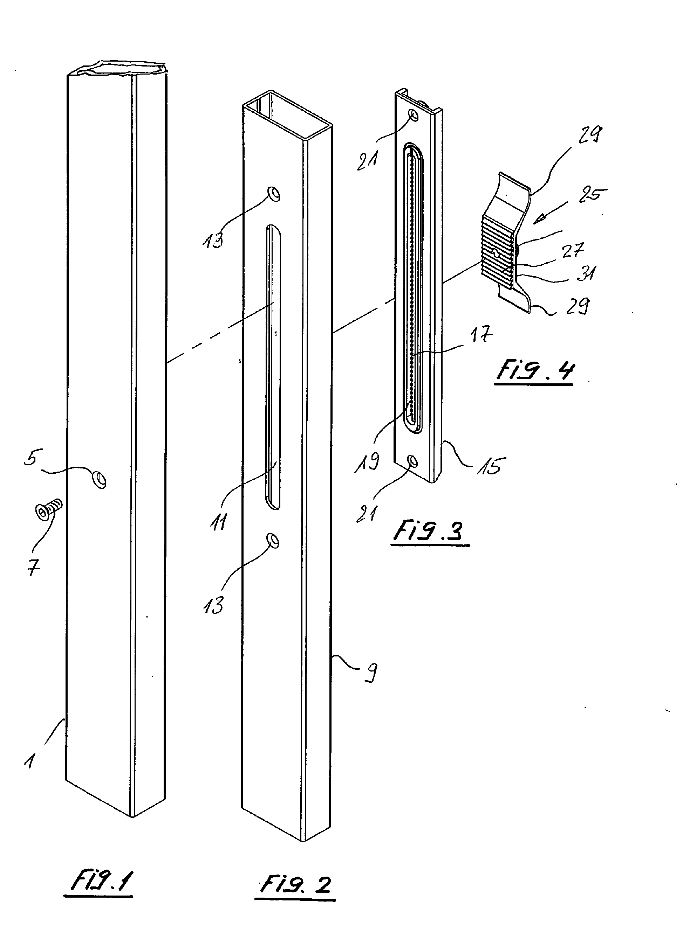

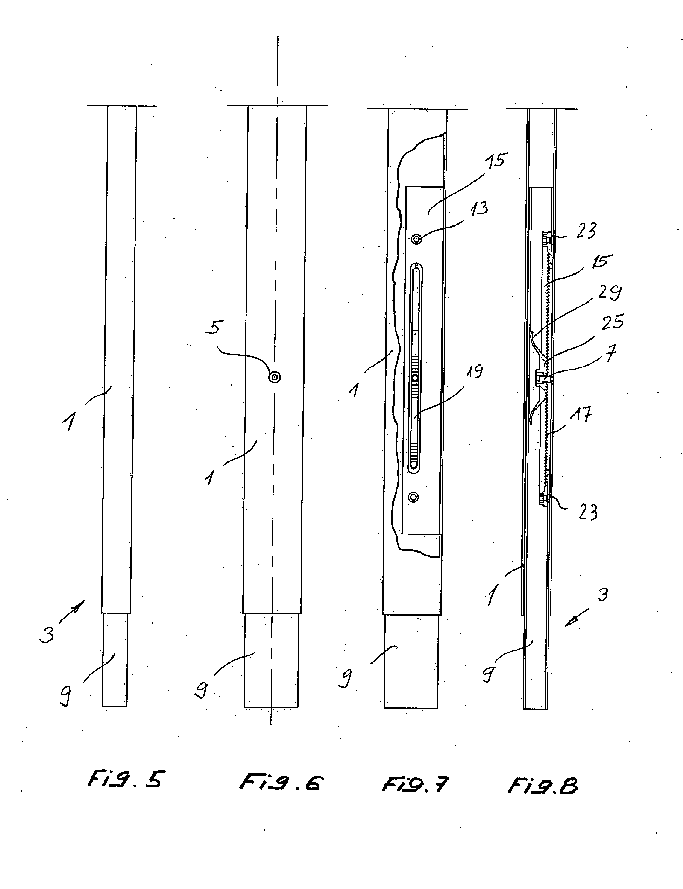

Das in Figur 1 beispielsweise dargestellte Aussenrohr 1 eines Tischbeins 3 weist einen rechteckigen Querschnitt auf. Alternativ könnte das Aussenrohr 1 auch rund oder oval ausgebildete sein. Im Aussenrohr 1 ist eine Bohrung 5 für eine Betätigungsschraube 7 eingelassen. Das in Figur 2 dargestellte Innenrohr 9 umfasst eine parallel zu den Kanten des Innenrohrs 9 verlaufende Ausnehmung 11 und oberhalb und unterhalb der Ausnehmung 11 je eine Gewindebohrung 13. Mit den Gewindebohrungen 13 wird eine Zahnschiene 15 verbunden, deren quer zur Längsrichtung liegende Zähne 17 durch einen Schlitz 19 in zwei Hälften unterteilt sind. Ober- und Unterhalb des Schlitzes 19 sind Löcher 21 ausgebildet, durch die Schrauben zum Befestigen der Zahnschiene 15 im Innern des Innenrohrs 9 hinter der Ausnehmung 11 dienen. Die Schrauben 23 für die Verbindung sind in Figur 8 dargestellt.

In Figur 4 ist ein Zahnsegment 25 abgebildet, welches einen rechtwinkligen Zahnbereich 27 und zwei an den Zahnbereich 27 anschliessende Federbügel 29 umfasst. Der Zahnbereich 27 kann einteilig mit den Flügeln 29 hergestellt sein oder auf einer die Flügel 29 verbindenden Platte 31 angeordnet sein. Die Flügel 29 sind aus einem federelastischen Metall oder Kunststoff hergestellt.

In den beiden Figuren 7 und 8 ist die Lage und Funktionsweise bzw. das Zusammenwirken der Zahnschiene 15 und des Zahnsegments 25 ersichtlich.

Nach der Befestigung der Zahnschiene 15 im Innern des Innenrohrs 9 mit den Schrauben 23 wird das Innenrohr 9 in das Aussenrohr 1 eingeschoben und das in das Innenrohr 9 ebenfalls eingeschobene Zahnsegment 25 mit der Schraube 7, die durch die Bohrung 5 im Aussenrohr hindurch geführt wird, fixiert.

Um nun die Länge des Tischbeins 3 festzulegen, wird die Schraube 7 soweit gelöst, bis die ineinander greifenden Zähne an der Zahnschiene und am Zahnsegment ausser Eingriff gelangen. Dies geschieht dadurch, dass die Schraube 7 etwas gegen das Innere des Tischbeins 3 gedrückt wird und damit das Zahnsegment 25 in Figur 8 etwas nach links gedrückt wird. Danach lässt sich das Innenrohr 9 im Aussenrohr 1 auf die gewünschte Länge verschieben. Sobald der Druck auf die Schraube 7 aufgehoben wird, rasten die Zähne des Zahnsegments 25 aufgrund der Federwirkung der Flügel 29 wieder in den Zähnen 17 der Zahnschiene 15 ein. Um die eingestellte Länge sicherzustellen, wird die Schraube 7 angezogen und dadurch das Zahnsegment 25 an die Zahnschiene 15 herangezogen.

Je nach Abstand der Zähne kann der Betrag, um den die Länge des Tischbeins 3 verstellt werden kann, im Bereich von 1 mm oder mehr liegen. Selbstverständlich kann mit der Vorrichtung auch nur ein einzelnes Tischbein an Unebenheiten eines Bodens angepasst werden.

Für die Verstellung der Länge des Tischbeins ist nur ein Schraubendreher oder dergleichen notwendig. Zudem muss der Tisch bei Verlängerung des Tischbeins 3 beim jeweiligen Tischbein etwas angehoben werden, so dass das Innenrohr 9 nach unten gleiten kann. Um die Länge zu verkleinern, wird das Innenrohr 9 nach dem Lösen der Schraube 7 und einer axialen Verschiebung derselben nach oben gedrückt, bis die neue Länge erreicht ist.

Von aussen ist von der Verstellvorrichtung einzig die Fixierschraube 7 sichtbar. Diese kann ohne Weiteres auf der Innenseite des Tischbeins angeordnet werden.

## Patentansprüche

1. Vorrichtung zum Ein- und Verstellen der Länge von teleskopartig aufgebauten Tischbeinen (3), umfassend ein Aussenrohr (1) und ein im Aussenrohr (1) verschiebbares Innenrohr (9) und Mittel zum gegenseitigen Verrasten der beiden Rohre (1,9) auf einer eingestellten Länge,
**dadurch gekennzeichnet, dass**
die Mittel eine Zahnschiene (15) und ein federelastisch ausgebildetes Zahnsegement (25) umfassen, wobei die Zahnschiene (15) mit dem Innenrohr (9) und das Zahnsegment (25) mit dem Aussenrohr (1) verbunden ist.

2. Vorrichtung nach Anspruch 1, **dadurch gekennzeichnet, dass** die Zähne der Zahnschiene (15) durch einen im Zentrum der Zahnschiene (15) verlaufenden Schlitz (19) in zwei Zahnhälften unterteilt sind und dass das Zahnsegment (25) von einer das Aussenrohr (1) in einer Bohrung (5) und die Zahnschiene (15) im Schlitz (19) durchdringenden Schraube (7) am Aussenrohr (1) gehalten und mit der Zahnschiene (15) an der gewünschten Stelle verrastbar ist.

3. Vorrichtung nach einem der Ansprüche 1 oder 2, **dadurch gekennzeichnet, dass** das Zahnsegment (25) einen Zahnbereich (27) und seitlich an dem Zahnbereich (27) anschliessende federnde Flügel (29) umfasst.
